# EUROPÄISCHE PATENTSCHRIFT

(11) **EP 1 566 393 B1**
(45) Veröffentlichungstag und Bekanntmachung des Hinweises auf die Patenterteilung: **25.07.2007**
(21) Anmeldenummer: 05002741.6
(22) Anmeldetag: 10.02.2005
(51) Int. Cl.: C08G 18/08, C08G 18/28, C08G 18/48, C09D 7/00

(54) **Verdickungsmittel für Polyurethanbasis**
Polyurethane based thickener
Epaississant à base de polyuréthane

(30) Priorität: 19.02.2004 DE 102004008015
(43) Veröffentlichungstag der Anmeldung: 24.08.2005
(73) Patentinhaber: Cognis IP Management GmbH, 40589 Düsseldorf (DE)
(72) Erfinder: Schieferstein, Ludwig, 40882 Ratingen (DE); Pietsch, Oliver, 45481 Mülheim (DE)

(56) Entgegenhaltungen:
- EP-A- 0 307 775
- EP-A- 0 725 097
- US-A- 4 079 028

## Beschreibung

Die Erfindung betrifft Verdickungsmittel basierend auf einer wäßrigen Zubereitung nicht-ionischer in Wasser dispergierbarer oder löslicher Polyurethane spezieller Struktur.

Assoziative Verdicker auf Polyurethanbasis sind lineare oder verzweigte, nicht-ionische Polymere mit hydrophilen und hydrophoben Segmenten. In zunehmenden Maße substituieren oder ergänzen sie die traditionell als Verdicker in Farben und Lacken eingesetzten Celluloseether sowie die alkalilöslichen Polyacrylate. Gegenüber diesen weisen die Polyurethanverdicker folgende Vorteile auf:
- geringere Viskosität beim Einarbeiten
- geringere Spritzneigung beim Verstreichen
- besserer Farbverlauf
- höherer Glanz durch weniger Flokkulation
- geringere Wasserempfindlichkeit der Beschichtungen
- geringere Anfälligkeit gegen mikrobiellen Angriff
- geringe Eigenviskosität in der Konfektionierungsform und daraus resultierend gute Dosierbarkeit
- hohe Verdickungswirkung in den zu verdickenden Dispersionen
- möglichst geringer Abfall der Viskosität in den verdickten Dispersionen unter Scherung, näherungsweise Newton'sches Fließverhalten.

Derartige Polyurethanverdicker gehören zum Stand der Technik. Sie werden beispielsweise in US 4,079,028 und in US 4,155,892 beschrieben. Zur Herstellung der Polyurethane werden laut diesen Patentschriften folgende Komponenten (Polymerbausteine) miteinander zur Reaktion gebracht:
- mindestens ein wasserlösliches Polyetherpolyol
- mindestens ein wasserunlösliches organisches Polyisocyanat
- mindestens eine monofunktionelle hydrophobe organische Verbindung ausgewählt aus Verbindungen mit einem gegenüber Isocyanaten aktiven Wasserstoffatom und organischen Monoisocyanaten und
- mindestens einen polyfunktionellen Alkohol oder polyfunktionellen Etheralkohol.

Als hydrophobe Verbindungen, die strukturell ein gegenüber Isocyanaten aktives Wasserstoffatom aufweisen, werden inter alia Fettalkohole wie Methanol, Ethanol, Octanol, Dodecanol, Tetradecanol, Hexadecanol und Cyclohexanol genannt (vergl. Spalte 9, Zeilen 46-50 der US 4,079,028).

EP-B-307,775 betrifft wasserdispergierbare, modifizierte Polyurethane, die Umsetzungsprodukte von
- einem Polyisocyanat,
- einem Polyetherpolyol,
- einem modifizierenden Agens mit mindestens 2 aktiven Wasserstoffeinheiten und mindestens einer hydrophoben Gruppe, wobei das modifizierende Agens keine Gruppen enthält, die mit Polyisocyanat oder dem Polyetherpolyol reagieren können, und
- einem Verkappungsmittel
darstellen. Als Verkappungsmittel dienen inter alia primäre Alkohole wie Octanol, Decanol, Dodecanol, Tetradecanol, Hexadecanol, Stearylalkohol und 2-Ethylhexanol (vergl. S.8, Zeilen 51-52).

EP-B-612,329 betrifft wasserdispergierbare, modifizierte Polyurethane, die Umsetzungsprodukte von
- einem Polyisocyanat,
- Polyetherpolyolen,
- monofunktionellen Alkoholen und
- gewünschtenfalls mehrfunktionellen Alkoholen,
wobei die monofunktionellen Alkohole mindestens eine weitere polare, gegenüber Isocyanaten nicht reaktive Gruppe enthalten, und zwar eine Ester-, Amid- und/oder Oxazolingruppe.

Aufgabe der Erfindung war es, Verdickungsmittel auf Polyurethanbasis bereitzustellen, die gegenüber den Polyurethanverdickungsmitteln aus dem Stand der Technik nochmals eine deutliche Verbesserung der eingangs genannten Vorteile von Polyurethanverdickungsmitteln aufweisen. Insbesondere sollte bei vergleichsweise geringerer Eigenviskosität der Verdickungsmittel in ihrer Konfektionierungsform bei gleicher Menge eine erhöhte Viskosität des verdickten Produkts erreicht werden. Des weiteren soll eine weitere Annäherung an Newton'sches Fließverhalten erreicht werden. Außerdem sollen die Verdickungsmittel gewünschtenfalls ohne die Verwendung von flüchtigen organischen Lösungsmitteln herstellbar sein.

Erfindungsgemäß wurde die Aufgabe gelöst durch Verdickungsmittel, basierend auf einer wäßrigen Zubereitung nicht-ionischer, in Wasser dispergierbarer oder in Wasser löslicher Polyurethane, die herstellbar sind durch Umsetzung von
(a) ein oder mehreren polyfunktionellen Isocyanaten mit
(b) ein oder mehreren Polyetherpolyolen,
(c) ein oder mehreren monofunktionellen Alkoholen und
(d) gewünschtenfalls ein oder mehreren mehrfunktionellen Alkoholen, wobei die Verbindungen (d) außer den OH-Gruppen keine weiteren funktionellen Gruppen enthalten,
wobei die Komponente (c) einen verzweigten primären Alkohol spezieller Struktur, nämlich 2-(n-Butyl)-1-octanol, enthält.

Es hat sich überraschenderweise gezeigt, dass die Polyurethane gemäß der vorliegenden Erfindung, die als Baustein (c) 2-(n-Butyl)-1-octanol einpolymerisiert enthalten, sich von den Polyurethanen gemäß US 4,079,028 bzw. US 4,155,892, durch eine deutlich verbesserte Verdickungswirkung in wässrigen Zubereitungen auszeichnen (vergleiche hierzu auch den Beispielteil der vorliegenden Anmeldung).

### Zu den Komponenten (a)

Als polyfunktionelle Isocyanate (a) sind alle mehrfunktionellen aromatischen, alicyclischen und aliphatischen Isocyanate geeignet. Vorzugweise enthalten die geeigneten mehrfunktionellen Isocyanate im Mittel 2 bis höchstens 4 NCO- Gruppen.

Beispielsweise seien als geeignete Isocyanate genannt 1,5- Naphthylendiisocyanat, 4,4'-Diphenylmethandiisocyanat (MOI), hydriertes MDI (H₁₂MDI), Xylylendiisocyanat (XDI), Tetramethylxyloldiisocyanat (TMXDI), 4,4'- Diphenyldimethylmethandiisocyanat, Di- und Tetraalkyldiphenylmethandiisocyanat, 4,4'-Dibenzyldiisocyanat, 1,3-Phenylendiisocyanat, 1,4-Phenylendiisocyanat, die Isomeren des Toluylendiisocyanats (TDI), gegebenenfalls in Mischung, 1-Methyl-2,4-diisocyanato-cyclohexan, 1,6- Diisocyanato-2,2,4-trimethylhexan, 1,6-Diisocyanato-2,4,4-trimethylhexan, 1-Isocyanatomethyl-3-isocyanato-1,5,5-trimethyl-cyclohexan, chlorierte und bromierte Diisocyanate, phosphorhaltige Diisocyanate, 4,4'-Diisocyanatophenylperfluorethan, Tetramethoxybutan-1,4-diisocyanat, Butan- 1,4-diisocyanat, Hexan-1,6-diisocyanat (HDI), Dicyclohexylmethandiisocyanat, Cyclohexan-1,4-diisocyanat, Ethylen- diisocyanat, Phthalsäure-bis-isocyanatoethylester, ferner Polyisocyanate mit reaktionsfähigen Halogenatomen, wie 1-Chlormethylphenyl-2,4-diisocyanat, 1-Brommethylphenyl-2,6-diisocyanat, 3,3-Bis-chlormethylether-4,4'-diphenyldiisocyanat. Schwefelhaltige Polyisocyanate erhält man beispielsweise durch Umsetzung von 2 mol Hexamethylendiisocyanat mit 1 mol Thiodiglykol oder Dihydroxydihexylsulfid. Weitere wichtige Diisocyanate sind Trimethylhexamethylendiisocyanat, 1,4-Diisocyanatobutan, 1,2-Diisocyanatododecan und Dimerfettsäure-diisocyanat. Interesse verdienen teilweise verkappte Polyisocyanate, welche die Bildung selbstvernetzender Polyurethane ermöglichen, z.B. dimeres Toluylendiisocyanat, oder mit beispielsweise Phenolen, tertiärem Butanol, Phthalimid, Caprolactam partiell umgesetzte Polyisocyanate.

Erfindungsgemäß bevorzugt ist es, dass die zur Herstellung der Polyurethane eingesetzten polyfunktionellen Isocyanate (a) zumindest überwiegend Isophorondiisocyanat (IPDI) und/oder Tetramethylxyloldiisocyanat (TMXDI) enthalten. Vorzugsweise wird Komponente (a) ausschließlich gewählt aus der Gruppe Isophorondiisocyanat (IPDI) und Tetramethylxyloldiisocyanat (TMXDI).

Besonders gute Ergebnisse werden mit TMXDI erzielt, zumal sich dieses bei der Reaktionsführung einfacher handhaben lässt.

In einer Ausführungsform werden Isocyanate mit einer Funktionalität von 2 (difunktionelle Isocyanate) eingesetzt.

In einer anderen Ausführungsform werden - anteilsweise oder ganz - Isocyanate mit einer Funktionalität oberhalb von 2 eingesetzt, wenn nämlich gewünscht ist, Polyurethane mit verzweigter Struktur herzustellen.

### Zu den Komponenten (b)

Als Polyetherpolyole (b) sind beispielsweise die Polymerisationprodukte des Ethylenoxids, des Propylenoxids und/oder des Butylenoxids, deren Misch- oder Pfropfpolymerisationsprodukte sowie die durch Kondensation von mehrwertigen Alkoholen oder Mischung derselben und die durch Alkoxylierung von mehrwertigen Alkoholen, Amiden, Polyamiden und Aminoalkoholen gewonnenen Polyether geeignet. Bevorzugterweise sind diese Polyetherpolyole so stark hydrophil, dass sie wasserlöslich sind.

Zur Herstellung der erfindungsgemäßen Polyurethane eignen sich bevorzugt solche Polyetherpolyole, die zumindestens überwiegend Polyalkylenglycole, insbesondere Polyethylenglycol und/oder Polypropylenglycol enthalten. Besonders gute Ergebnisse werden erzielt, wenn diese Polyalkylenglycole einen mittleren Gehalt an Alkoxyeinheiten im Bereich von 20 bis 500, insbesondere im Bereich von 100 bis 250 aufweisen. Besitzen die geeigneten Diole die allgemeine Formel

HO-(CHR¹-CH₂O)ₙ-H

so kann n die Werte 20 bis 500 annehmen und R¹ kann H oder CH₃ sein. Bevorzugt sind dabei Diole mit R¹ = H und n = 100 bis 250, insbesondere n = 120 bis 180.
In einer bevorzugten Ausführungsform besteht das Polyurethanmolekül bis zu 90 Gew.- % aus den o. g. Dioleinheiten.

### Zur Komponente (c)

Bei Komponente (c) handelt es sich um monofunktionelle Alkohole. Hierunter werden im Rahmen der vorliegenden Erfindung Alkohole verstanden, die pro Molekül lediglich eine freie OH-Gruppe aufweisen. Diese ist vorzugsweise endständig. Ausdrücklich sei angemerkt, daß die monofunktionellen Alkohole auch zusätzliche Ethergruppen (also Gruppierungen -O-) enthalten dürfen. Vorzugsweise sind die monofunktionellen Alkohole jedoch frei von weiteren funktionellen Gruppen.

Wie bereits erwähnt, enthält die Komponente (c) zwingend einen verzweigten primären Alkohol spezieller Struktur, nämlich 2-(n-Butyl)-1-octanol. Die Wahl dieses speziellen Hydrophobalkohols als zwingenden Bestandteil von Komponente (c) verleiht den erfindungsgemäßen Polyurethanen hinsichtlich der Verdickungswirkung wässriger Zubereitungen ganz exzellente und nicht vorhersehbare Eigenschaften.
Dabei kann es gewünscht sein, daß Komponente (c) neben 2-(n-Butyl)-1-octanol noch ein oder mehrere monofunktionelle Alkohole enthält. Dabei beträgt der Anteil an 2-(n-Butyl)-l-octanol - bezogen auf die Gesamtheit der monofunktionellen Alkohole der komponente c) - vorzugsweise mehr als 50 Gew.-%.

In einer anderen Ausführungsform ist 2-(n-Butyl)-l-octanol der einzige monofunktionelle Alkohol der Komponente (c).

### Zur Komponente (d)

Als weitere Komponente zur Herstellung der Polyurethane können mehrfunktionelle Alkohole (d) eingesetzt werden. Komponente (d) ist mithin optional. Hierzu sind Alkohole mit einer Funktionalität von 2 bis 4 besonders geeignet.

Ausdrücklich sei festgestellt, dass es sich bei den Komponenten (d) um mehrfunktionelle Alkohole handelt, die neben den OH-Gruppen keine weiteren funktionellen Gruppen enthalten. Insbesondere sei darauf hingewiesen, dass hier keine Überschneidung etwa mit den Polyetherpolyolen vorliegt, die zwar ebenfalls mehrere OH-Gruppen enthalten, jedoch zwingend zusätzlich Gruppierungen -O- (Ethergruppen).
In einer Ausführungsform setzt man Alkohole mit einer Funktionalität von 2 ein, also Diole, insbesondere Diole mit terminalen OH-Gruppen.
Will man Verzweigungen beim Aufbau des Polyurethanmoleküls herbeiführen, so sind zumindest trifunktionelle Ausgangssubstanzen einzusetzen. Derartig verzweigte Polyurethane als Basis für die erfindungsgemäßen Verdickungsmitteln sind als eine besondere Ausführungsform der Erfindung anzusehen. Vorzugsweise enthalten dann die mehrfunktionellen Alkohole (d) zumindest überwiegend trifunktionelle Alkohole, wie beispielsweise Glycerin. Als trifunktioneller Alkohol ist im Sinne der Erfindung Trimethylolpropan (TMP) bevorzugt. Es können jedoch auch Verzweigungen beim Aufbau des Polyurethanmoleküls durch den Einsatz von Isocyanaten mit einer höheren Funktionalität als 2 erreicht werden. Hier sind Triisocyanate bevorzugt. Zur Optimierung der anwendungstechnischen Eigenschaften der Verdickungsmittel ist es sinnvoll, derartige Verzweigungsstellen innerhalb des Polyurethanmoleküls auf einen bestimmten Bereich zu beschränken.

### Zu den erfindungsgemäß einzusetzenden Polyurethanen

Das OH/NCO Verhältnis der erfindungsgemäß einzusetzenden Polyurethane, die zwingend die Bausteine (a), (b) und (c) enthalten müssen, lässt sich im Prinzip über einen weiten Bereich variieren, bevorzugt ist jedoch ein stöchiometrisches Verhältnis oder ein Verhältnis mit einem leichten Überschuss an OH-Gruppen im Bereich von etwa 5 bis 10 %. Vorzugsweise liegt das Verhältnis bei 1 : 1.

Des weiteren ist anzumerken, dass die OH-funktionelle Komponente b) zumindest teilweise auch durch analoge Aminverbindungen ersetzt werden kann.

In einer Ausführungsform der Erfindung sind die Polyurethanmoleküle linear, weisen also keine Verzweigung auf. Sie besitzen die allgemeine Formel:
R²-O-[CO-NH-R³-NH-CO-O-(CHR¹-CH₂-O)ₙ]ₘ-CO-NH-R³-NH-CO-O-R²

Dabei bedeuten:
R¹ = H oder CH₃, bevorzugt H.
R² = Rest des mit Isocyanat umgesetzten monofunktionellen Alkohols (c)
R³ = Rest des mit gegenüber Isocyanaten reaktiven OH-Gruppen umgesetzten Diisocyanats (a)
n = 20 bis 500 und
m = 1 bis 10
Vorzugsweise beträgt m 1 bis 5. Beste Ergebnisse werden für m = 1 oder 2 erhalten.

In einer Ausführungsform enthalten die erfindungsgemäß einzusetzenden Polyurethane die Bausteine (a), (b), (c) und (d).

In einer weiteren Ausführungsform enthalten die erfindungsgemäß einzusetzenden Polyurethane ausschließlich die Bausteine (a), (b) und (c).

In einer weiteren Ausführungsform enthalten die erfindungsgemäß einzusetzenden Polyurethane ausschließlich die Bausteine (a), (b)-und (c), wobei es sich bei (c) ausschließlich um 2-(n-Butyl)-1-octanol handelt.

Ein weiterer Erfindungsgegenstand sind Verdickerkonzentrate enthaltend
(A) Wasser,
(B) nicht-ionische, in Wasser dispergierbare oder in Wasser lösliche Polyurethane, die herstellbar sind durch Umsetzung von
   (a) ein oder mehreren polyfunktionellen Isocyanaten mit
   (b) ein oder mehreren Polyetherpolyolen,
   (c) ein oder mehreren monofunktionellen Alkoholen und
   (d) gewünschtenfalls ein oder mehreren mehrfunktionellen Alkoholen, wobei die Verbindungen (d) außer den OH-Gruppen keine weiteren funktionellen Gruppen enthalten,
   wobei die Komponente (c) einen verzweigten primären Alkohol spezieller Struktur, nämlich 2-(n-Butyl)-1-octanol, enthält und
(C) gegebenenfalls ein oder mehrere organische Lösungsmittel und/oder nicht-ionische Tenside vom Typ der Anlagerungsverbindungen von Ethylen- und/oder Propylenoxid an Fettalkohole mit 8-18 C-Atomen.
Bezüglich bevorzugter Ausführungsformen im Hinblick auf die Verbindungen (B) gilt das oben Ausgeführte.
Bei den Lösungsmitteln (C) handelt es sich um flüchtige organische Lösungsmittel. Beispiele hiefür sind niedermolekulare Alkohole wie Methanol, Ethanol, n-Propanol, i-Propanol, n-Butanol, i-Butanol, sec-Butanol, Ethandiol, Propandiol, Butandiol, Glycerin, Trimethylolpropan in Betracht.
Als nicht-ionische Tenside vom Typ der Anlagerungsverbindungen von Ethylen- und/oder Propylenoxid an Fettalkohole mit 8-18 C-Atomen (C) sind solche mit 2 bis 4 Mol Ethylenoxid pro Mol Fettalkohol bevorzugt, etwa Dehydol 04 (Handelsprodukt der Fa. Cognis Deutschland GmbH % Co. KG).

Desweiteren betrifft die Erfindung die Verwendung der erfindungsgemäßen Verdickungsmittel bzw. Verdickerkonzentrate zur Verdickung wäßriger Systeme, bevorzugt wäßriger Dispersionen, ausgewählt aus der Gruppe bestehend aus wäßrigen Kraftfahrzeug- und Industrielacken, Druck- und Textilfarben, Pigmentdruckpasten, wäßrigen kosmetischen, pharmazeutischen und pharmazeutische-kosmetischen Zubereitungen, Pflanzenschutzformulierungen, Füllstoff- und Pigmentdispersionen, Zubereitungen von Waschmitteln, Klebstoffen, Wachsen und Polituren sowie für die Erdölförderung, insbesondere zur Verdickung von wäßrigen Putz- und Anstrichfarben in Dispersionsform.

### Beispiele

### Polyurethanherstellung

### Beispiel 1

Im 11-Vierhalskolben wurden 207,1g (24 mmol) Polyglycol E 8000 (Polyethylenglykol der Dow Chemikal; OHZ=13) vorgelegt. Es wurde zweimal evakuiert und mit Stickstoff belüftet. Anschließend wurde Vakuum angelegt und der Ansatz auf 110°C erhitzt. Bei dieser Temperatur wurde bei einem Vakuum von mindestens 10 mbar über einen Zeitraum von zwei Stunden entwässert. Dann wurde mit Stickstoff belüftet und im weiteren Verlauf die Schutzgasatmosphäre durch eine leichten Stickstoffstrom aufrechterhalten. Über die gesamte folgende Reaktionszeit wurde mit einer Rührerdrehzahl von 120 Upm gerührt. Danach wurden nacheinander 8,9g (48 mmol) 2-Butyl-1-octanol, 11,7g (48 mmol) m-Tetramethylxylylendiisocyanat (TMXDI, Fa. Cytec) und dann (als Katalysator) 0,05g 1,8-Diazabicyclo[5-4-0]undecen-7 (Fa. Nitroil) zugegeben. Die Reaktionstemperatur wurde der Zugabe und während der folgenden Reaktionszeit bei 110°C gehalten.
Sobald kein Restisocyanat mehr nachweisbar war (dies war nach ca. zwei Stunden der Fall), wurden ohne weitere Heiz- oder Kühlmassnahmen zunächst 139,1g Dehydol 04 deo (Anlagerungsprodukt von 4 Mol Ethylenoxid an 1 Mol n-Octanol; Handelsprodukt der Fa. Cognis) zugesetzt und bis zur Homogenität gerührt. Dabei sank die Temperatur auf unter 100 °C ab.
Anschließend wurden unter Rühren 347,8g deionisiertes Wasser zugesetzt und bis zum Erreichen der Homogenität gerührt.
Es wurden ca. 700 g einer viskosen, klaren, leicht gelblichen Polymerlösung aus dem Reaktionsgefäß isoliert.

Der Trockenrückstand (zu dessen Bestimmung wurden ca. 1-2 g der wie beschrieben hergestellten Polymerlösung in einem 10-cm-Aluschälchen bei 105°C über 1,5 h im Umlufttrockenschrank getrocknet) betrug 48,0 Gew.-% und die Brookfield-Viskosität 3,3 Pas (Brookfield RVT-Viskosimeter mit Spindel 6 bei 20 Umdrehungen und 22°C).

### Vergleichsversuch 1

Es wurde analog zu Beispiel 1 verfahren, wobei jedoch anstelle der in Beispiel 1 eingesetzten 8,9g (48 mmol) 2-Butyl-1-octanol, 6,2 g (48 mmol) n-Octanol eingesetzt wurden. Die Viskosität der erhaltenen Polymerlösung betrug 2,5 Pas.

### Vergleichsversuch 2

Es wurde analog zu Beispiel 1 verfahren, wobei jedoch anstelle der in Beispiel 1 eingesetzten 8,9g (48 mmol) 2-Butyl-1-octanol, 7,6 g (48 mmol) n-Decanol eingesetzt wurden. Die Viskosität der erhaltenen Polymerlösung betrug 2,0 Pas.

### Vergleichsversuch 3

Es wurde analog zu Beispiel 1 verfahren, wobei jedoch anstelle der in Beispiel 1 eingesetzten 8,9g (48 mmol) 2-Butyl-1-octanol, 8,9 g (48 mmol) n-Dodecanol eingesetzt wurden. Die Viskosität der erhaltenen Polymerlösung betrug 10 Pas.

### Vergleichsversuch 4

Es wurde analog zu Beispiel 1 verfahren, wobei jedoch anstelle der in Beispiel 1 eingesetzten 8,9g (48 mmol) 2-Butyl-1-octanol, 9,6 g (48 mmol) i-Tridecylalkohol eingesetzt wurden. Die Viskosität der erhaltenen Polymerlösung betrug 1,5 Pas.

### Bestimmung der Dispersionsverdickung

### Beispiel 1a

### (Verdickungsversuche mit der Polymerlösung gemäß Beispiel 1)

1,43 g der gemäß Beispiel 1 erhaltenen Polymerlösung (diese 1,43 g Polymerlösung enthalten ca. 0,40 g an Polyurethan, 0,29 g an Dehydol 04 und 0,74 g Wasser) wurden mit 0,41g einer Mischung aus 31,4 Gew.-% Propandiol und 68,6 Gew.-% Wasser homogenisiert.
Danach wurden 20g der wäßrigen Polyacrylatdispersion Neocryl XK 90 (45% Feststoffgehalt; Fa. Neo Resins) zugesetzt und diese Mischung mit einem Holzspatel ca. zwei Minuten homogen gerührt. Nach einer Standzeit von mindestens 20 Stunden wurde erneut mit einem Holzspatel vorsichtig durchgerührt.
Anschließend wurde mit einem Brookfield Kegel-Platte-Viskosimeter Haake RC20-CPS-P mit Kegel C50-1 die Viskosität gemessen. Sie betrug 680 mPas bei einer Scherrate von 300 s⁻¹ und 145 mPas bei einer Scherrate von 4800 s⁻¹.
Mit der gleichen Probe wurde die Viskosität an einem Epprecht Kegel-Platte-Viskosimeter mit dem Messkegel C die ICI-Viskosität bei 10000 sec-1 gemessen. Sie beträgt 140 mPas.
In gleicher Weise wurde auf dem Brookfield Kegel-Platte-Viskosimeter Haake RC20-CPS-P mit Kegel C50-1 die Verdickungswirkung des Polyurethans in der wäßrigen Vinylacetat-Ethylen-Copolymerdispersion Mowilith LDM 1871 (53% Feststoffgehalt; Fa. Clariant) bestimmt.
Sie betrug 0,68 Pas bei einer Scherrate von 300 s⁻¹ und 0,145 Pas bei einer Scherrate von 4800 s⁻¹.

### Vergleichsversuche 1a bis 4a

### (Verdickungsversuche mit der Polymerlösungen gemäß den Vergleichsversuchen 1 bis 4)

Die Herstellung von Dispersionen und die entsprechenden Viskositätsmessungen wurden wie unter Beispiel 1a beschrieben wurden wiederholt, wobei jedoch bei der herstellung der Dispersionen anstelle der gemäß Beispiel 1 erhaltenen Polymerlösung die gemäß Vergleichsversuch 1 erhaltene Polymerlösung eingesetzt wurde.
Ganz analog wurde mit den Polymerlösungen gemäß den Vergleichsversuchen 2 bis 4 verfahren
Die Ergebnisse sind Tabelle 1 zu entnehmen. Der Übersicht halber sind in Tabelle 1 auch die Viskositätsdaten gemäß Beispiel 1a aufgeführt.

**Tabelle 1: Dispersionsviskositäten**

| (Beispiel 1a und Vergleichsversuche 1a bis 4a) | | | | | |
|---|---|---|---|---|---|
| | **Dispersionsviskosität [mPas]** | | | | |
| | **Dispersion 1 (vi)** | | | **Dispersion 2 (vii)** | |
| | **Brookfield RC20-CPS-P** | | **Epprecht-ICI-Visk.m.** | **Brookfield RC20-CPS-P** | |
| **Polyurethan gemäß** | 300s⁻¹ | 4800s⁻¹ | 10 000s⁻¹ | 300s⁻¹ | 4800s⁻¹ |
| Beispiel 1 (i) | 680 | 145 | 140 | 253 | 98 |
| Vergleichsversuch 1 (ii) | 140 | 75 | 130 | 141 | 68 |
| Vergleichsversuch 2 (iii) | 330 | 110 | 130 | 229 | 86 |
| vergleichsversuch 3 (iv) | 670 | 110 | 130 | 214 | 80 |
| Vergleichsversuch 4 (v) | 260 | 95 | 130 | 167 | 75 |

| | | | | | |
|---|---|---|---|---|---|
| i) das Polyurethan-Polymer gemäß Beispiel enthält als Komponente (c) 2-Butyl-1-octanol ii) das Polyurethan-Polymer gemäß Vergleichsversuch 1 enthält als Baustein (c) n-Octanol iii) das Polyurethan-Polymer gemäß Vergleichsversuch 2 enthält als Baustein (c) n-Decanol iv) das Polyurethan-Polymer gemäß Vergleichsversuch 4 enthält als Baustein (c) i-Tridecylalkohol v) das Polyurethan-Polymer gemäß Vergleichsversuch 4 enthält als Baustein (c) i-Tridecylalkohol vi) Dispersion basiert auf Neocryl XK 90 und ist somit eine Polyacrylat-Dispersion vi) Dispersion 2 basiert auf Mowilith LDM 1871 und ist somit eine Vinylacetat-Ethylen-Copolymer-Dispersion | | | | | |

## Patentansprüche

1. Verdickungsmittel, basierend auf einer wäßrigen Zubereitung nicht-ionischer, in Wasser dispergierbarer oder in Wasser löslicher Polyurethane, die herstellbar sind durch Umsetzung von
(a) ein oder mehreren polyfunktionellen Isocyanaten mit
(b) ein oder mehreren Polyetherpolyolen,
(c) ein oder mehreren monofunktionellen Alkoholen und
(d) gewünschtenfalls ein oder mehreren mehrfunktionellen Alkoholen, wobei die Verbindungen (d) außer den OH-Gruppen keine weiteren funktionellen Gruppen enthalten,
**dadurch gekennzeichnet, dass** die Komponente (c) 2-(n-Butyl)-1-octanol enthält.

2. Verdickungsmittel, basierend auf einer wäßrigen Zubereitung nicht-ionischer, in Wasser dispergierbarer oder in Wasser löslicher Polyurethane, die herstellbar sind durch Umsetzung von
(a) ein oder mehreren polyfunktionellen Isocyanaten mit
(b) ein oder mehreren Polyetherpolyolen und
(c) ein oder mehreren monofunktionellen Alkoholen
**dadurch gekennzeichnet, dass** die Komponente (c) 2-(n-Butyl)-1-octanol enthält.

3. Verdickungsmittel gemäß Anspruch 1 oder 2, wobei Komponente (b) gewählt wird aus der Gruppe der Polyethylenglycole und der Polypropylenglycole.

4. Verdickungsmittel, basierend auf einer wäßrigen Zubereitung nicht-ionischer, in Wasser dispergierbarer oder in Wasser löslicher Polyurethane, die herstellbar sind durch Umsetzung von
(a) ein oder mehreren polyfunktionellen Isocyanaten mit
(b) ein oder mehreren Polyetherpolyolen und
(c) 2-(n-Butyl)-1-octanol.

5. Verdickungsmittel gemäß Anspruch 4, wobei Komponente (b) gewählt wird aus der Gruppe der Polyethylenglycole und der Polypropylenglycole.

6. Verdickungsmittel gemäß einem der Ansprüche 1 bis 5, wobei Komponente (a) gewählt wird aus der Gruppe Isophorondiisocyanat (IPDI) und Tetramethylxyloldiisocyanat (TMXDI).

7. Verdickerkonzentrate enthaltend
(A) Wasser,
(B) nicht-ionische, in Wasser dispergierbare oder in Wasser lösliche Polyurethane, die herstellbar sind durch Umsetzung von
(a) ein oder mehreren polyfunktionellen Isocyanaten mit
(b) ein oder mehreren Polyetherpolyolen,
(c) ein oder mehreren monofunktionellen Alkoholen und
(d) gewünschtenfalls ein oder mehreren mehrfunktionellen Alkoholen, wobei die Verbindungen (d) außer den OH-Gruppen keine weiteren funktionellen Gruppen enthalten,
wobei die Komponente (c) 2-(n-Butyl)-l-octanol enthält und
(C) gegebenenfalls ein oder mehrere organische Lösungsmittel und/oder nicht-ionische Tenside vom Typ der Anlagerungsverbindungen von Ethylen- und/oder Propylenoxid an Fettalkohole mit 8-18 C-Atomen.

8. Verwendung der Verdickungsmittel gemäß den Ansprüchen 1 bis 6 zur Verdickung von Dispersionsfarben.

9. Verwendung der Verdickerkonzentrate gemäß Anspruch 8 zur Verdickung von wäßrigen Dispersionen.

10. Verwendung nach Anspruch 9, wobei es sich bei den wässrigen Dispersionen um kosmetische Zubereitungen handelt.

## Claims

1. Thickeners based on an aqueous preparation of nonionic water-dispersible or water-soluble polyurethanes obtainable by reaction of
(a) one or more polyfunctional isocyanates with
(b) one or more polyether polyols,
(c) one or more monofunctional alcohols and
(d) if desired, one or more polyfunctional alcohols, the compounds (d) containing no functional groups other than the OH groups,
**characterized in that** component (c) contains 2-(n-butyl)-1-octanol.

2. Thickeners based on an aqueous preparation of nonionic water-dispersible or water-soluble polyurethanes obtainable by reaction of
(a) one or more polyfunctional isocyanates with
(b) one or more polyether polyols and
(c) one or more monofunctional alcohols,
**characterized in that** component (c) contains 2-(n-butyl)-1-octanol.

3. Thickeners as claimed in claim 1 or 2, **characterized in that** component (b) is selected from the group consisting of polyethylene glycols and polypropylene glycols.

4. Thickeners based on an aqueous preparation of nonionic water-dispersible or water-soluble polyurethanes obtainable by reaction of
(a) one or more polyfunctional isocyanates with
(b) one or more polyether polyols and
(c) 2-(n-butyl)-1-octanol.

5. Thickeners as claimed in claim 4, **characterized in that** component (b) is selected from the group consisting of polyethylene glycols and polypropylene glycols.

6. Thickeners as claimed in any of claims 1 to 5, **characterized in that** component (a) is selected from the group consisting of isophorone diisocyanate (IPDI) and tetramethyl xylene diisocyanate (TMXDI).

7. Thickener concentrates containing
(A) water,
(B) nonionic water-dispersible or water-soluble polyurethanes obtainable by reacting reaction of
(a) one or more polyfunctional isocyanates with
(b) one or more polyether polyols,
(c) one or more monofunctional alcohols and
(d) if desired, one or more polyfunctional alcohols, the compounds (d) containing no functional groups other than the OH groups,
component (c) containing 2-(n-butyl)-1-octanol, and
(C) optionally one or more organic solvents and/or nonionic surfactants in the form of addition compounds of ethylene and/or propylene oxide onto C₈₋₁₈ fatty alcohols.

8. The use of the thickeners claimed in claims 1 to 6 for thickening dispersion paints.

9. The use of the thickener concentrates claimed in claim 8 for thickening aqueous dispersions.

10. The use claimed in claim 9, the aqueous dispersions being cosmetic preparations.

## Revendications

1. Epaississants à base d'une préparation aqueuse de polyuréthanes non ioniques, dispersibles ou solubles dans l'eau, pouvant être obtenus par la réaction
(a) d'un ou de plusieurs isocyanates polyfonctionnels avec
(b) un ou plusieurs polyols de polyéther,
(c) un ou plusieurs alcools monofonctionnels et
(d) éventuellement un ou plusieurs alcools polyfonctionnels, les composés (d) ne contenant, outre les groupes OH, aucun autre groupe fonctionnel,
**caractérisés en ce que**
le composant (c) contient du 2-(n-Butyl)-1-octanol.

2. Epaississants à base d'une préparation aqueuse de polyuréthanes non ioniques, dispersibles ou solubles dans l'eau, pouvant être obtenus par la réaction
(a) d'un ou de plusieurs isocyanates polyfonctionnels avec
(b) un ou plusieurs polyols de polyéther, et
(c) un ou plusieurs alcools monofonctionnels
**caractérisés en ce que**
le composant (c) contient du 2-(n-Butyl)-l-octanol.

3. Epaississants selon la revendication 1 ou 2, dans lesquels le composant (b) est choisi dans le groupe constitué des polyéthylène glycols et des polypropylène glycols.

4. Epaississants à base d'une préparation aqueuse de polyuréthanes non ioniques, dispersibles ou solubles dans l'eau, pouvant être obtenus par la réaction
(a) d'un ou de plusieurs isocyanates polyfonctionnels avec
(b) un ou plusieurs polyols de polyéther et
(c) du 2-(n-Butyl)-1-octanol.

5. Epaississants selon la revendication 4, dans lesquels le composant (b) est choisi dans le groupe constitué des polyéthylène glycols et des polypropylène glycols.

6. Epaississants selon l'une des revendications 1 à 5, dans lesquels le composant (a) est choisi dans le groupe constitué du diisocyanate d'isophorone (IPDI) et du diisocyanate de tétraméthylxylène (TMXDI).

7. Concentrés épaississants contenant
(A) de l'eau,
(B) des polyuréthanes non ioniques, dispersibles ou solubles dans l'eau, pouvant être obtenus par la réaction
(a) d'un ou de plusieurs isocyanates polyfonctionnels avec
(b) un ou plusieurs polyols de polyéther,
(c) un ou plusieurs alcools monofonctionnels et
(d) éventuellement un ou plusieurs alcools polyfonctionnels, les composés (d) ne contenant, outre les groupes OH, aucun autre groupe fonctionnel,
le composant (c) contenant du 2-(n-Butyl)-1-octanol, et
(C) éventuellement un ou plusieurs solvants organiques et/ou tensioactifs non ioniques du type des composés d'addition de l'oxyde d'éthylène et/ou de l'oxyde de propylène sur des alcools gras ayant de 8 à 18 atomes de carbone.

8. Utilisation des épaississants selon les revendications 1 à 6, pour épaissir des peintures à dispersion.

9. Utilisation des concentrés épaississants selon la revendication 8, pour épaissir des dispersions aqueuses.

10. Utilisation selon la revendication 9, dans laquelle les dispersions aqueuses sont des préparations cosmétiques.
